# EUROPEAN PATENT APPLICATION

(11) **EP 3 043 567 A1**
(43) Date of publication of application: **13.07.2016**
(21) Application number: 14843024.2
(22) Date of filing: 26.08.2014
(51) Int. Cl.: H04N 21/254

(54) **METHOD AND DEVICE FOR SETTING LANGUAGE TYPE**

(30) Priority: 04.09.2013 CN 201310397320
(71) Applicant: ZTE Corporation, Guangdong Province 518057 (CN)
(72) Inventor: ZHAN, Wei, Shenzhen Guangdong Province 518057 (CN); TU, Chengyi, Shenzhen Guangdong Province 518057 (CN); KONG, Jianhua, Shenzhen Guangdong Province 518057 (CN)
(74) Representative: Novagraaf Technologies
(86) International application number: PCT/CN2014/085191
(87) International publication number: WO 2015/032283

(57) **Abstract**

Provided are a method and apparatus for setting a language type. In the method, a language type corresponding to a multimedia file to be played is read; and the multimedia file is played according to the language type. The technical solution solves the technical problems of inconvenient operation and poor usability existing in a mode of setting language types of multimedia files in the related art, reduces a setting process required each time when a user plays the multimedia file, and improves the experience of the user.

## Description

### Technical Field

The present disclosure relates to the field of communications, and in particular to a method and apparatus for setting a language type.

### Background

An Interactive Personality TV (IPTV) is a brand new technology which integrates various technologies, such as internet technologies, multimedia technologies and communication technologies, and provides multiple types of interactive services, which include digital TV service for home users, by utilizing a broadband cable TV network. With the emergence of the IPTV into huge numbers of families, more and more people experience enjoyments brought by broadband, and the quality of life of the people is improved. An audio/video decoding technology, a streaming media transmission technology, a broadband access network technology and an Internet Protocol (IP) set-top box technology in an IPTV system are greatly developed.

The most basic and most important function in the IPTV system is a video playing function. Currently, most of videos provided to foreign countries, particularly multi-language countries, have audio tracks and subtitles of a plurality of language types. In a watching process, a user can select the audio track and subtitle of one type of language according to his/her own language habit.

Currently, most of the IPTV systems provide basic audio track and subtitle selection functions based on one-time settings, and the user has to reselect the audio track and the subtitle each time when he/she watches a multimedia file, thereby causing inconvenient operation and poor usability.

An effective solution is not yet proposed currently for the problems of inconvenient operation and poor usability existing in a mode of setting language types of multimedia files in the related art.

### Summary

The embodiments of the present disclosure provide a method and apparatus for setting a language type, which are intended to at least solve the technical problems of inconvenient operation and poor usability existing in the mode of setting the language types of the multimedia files in the related art.

According to one embodiment of the present disclosure, a method for setting a language type is provided, which may include that: a language type corresponding to a multimedia file to be played is read; and the multimedia file is played according to the language type.

Before the language type corresponding to the multimedia file to be played is read, the method may further include that: a setting of a user for a language type corresponding to a single multimedia file is stored; and/or, a unified setting of the user for a language type corresponding to all multimedia files is stored.

The step that the language type corresponding to the multimedia file to be played is read may include that: it is judged whether the setting of the user for the language type corresponding to the multimedia file to be played is stored; when the setting of the user for the language type corresponding to the multimedia file to be played is stored, the language type corresponding to the multimedia file to be played is read; when the setting of the user for the language type corresponding to the multimedia file to be played is not stored, it is judged whether the unified setting of the user for the language type corresponding to all the multimedia files is stored; when the unified setting of the user for the language type corresponding to all the multimedia files is stored, the unified setting of the user for the language type corresponding to all the multimedia files is read as the language type corresponding to the multimedia file to be played; and when the unified setting of the user for the language type corresponding to all the multimedia files is not stored, a default language type is read as the language type corresponding to the multimedia file to be played.

After the setting of the user for the language type corresponding to the single multimedia file is stored and/or the unified setting of the user for the language type corresponding to all the multimedia files is stored, the method may further include that: all devices in a group, to which a current user belongs, in an Electronic Program Guide (EPG) system are globally scanned, to determine whether the devices support a language type set in a code stream supported by the multimedia file to be played; and when the devices support the language type set in the code stream supported by the multimedia file to be played, the set language type of the multimedia file is synchronized into the group.

The step that the set language type of the multimedia file is synchronized into the group may include that: a version number corresponding to a language type of a multimedia file of the user is updated; it is judged whether a version corresponding to the language type of the multimedia file of the EPG system is lower than a version corresponding to the language type of the multimedia file of the user according to the version number; and when the version corresponding to the language type of the multimedia file of the EPG system is lower than the version corresponding to the language type of the multimedia file of the user, the language type of the multimedia file set by the user is synchronized to the EPG system, and a version number corresponding to the language type of the multimedia file of the EPG system is updated.

Before the language type corresponding to the multimedia file to be played is read, the method may further include that: it is judged whether the version corresponding to the language type of the multimedia file of the EPG system is higher than the version corresponding to the language type of the multimedia file of the current user according to the version number; and when the version corresponding to the language type of the multimedia file of the EPG system is higher than the version corresponding to the language type of the multimedia file of the current user, the language type of the multimedia file of the EPG system is synchronized to the current user, and the version number corresponding to the language type of the multimedia file of the current user is updated.

The language type may include: a language type of a subtitle and/or a language type of an audio track.

According to another embodiment of the present disclosure, an apparatus for setting a language type is also provided, which may include: a reading component, which is configured to read a language type corresponding to a multimedia file to be played; and a playing component, which is configured to play the multimedia file according to the language type.

The apparatus may further include: a storage component, which is configured to store a setting of a user for a language type corresponding to a single multimedia file, and/or, store a unified setting of the user for a language type corresponding to all multimedia files.

The apparatus may further include: a scanning component, which is configured to globally scan all devices in a group, to which a current user belongs, in an Electronic Program Guide (EPG) system, to determine whether the devices support a language type set in a code stream supported by the multimedia file to be played; and a synchronization component, which is configured to synchronize the set language type of the multimedia file into the group under a condition that a scanning result of the scanning component is that the devices support the language type set in the code stream supported by the multimedia file to be played.

In the embodiments of the present disclosure, a language type corresponding to a multimedia file to be played is read and the multimedia file is played according to the language type, thereby solving the technical problems of inconvenient operation and poor usability existing in the mode of setting the language types of the multimedia files in the related art, reducing the setting process required each time when the user plays the multimedia file, and improving the experience of the user.

### Brief Description of the Drawings

The drawings described herein are intended to provide further understanding of the embodiments of the present disclosure, and form a part of the present disclosure. The schematic embodiments and descriptions of the present disclosure are intended to explain the present disclosure, and do not form improper limits to the present disclosure. In the drawings:
Fig. 1 is a flowchart of a method for setting a language type according to an embodiment of the present disclosure;
Fig. 2 is a structure diagram of an apparatus for setting a language type according to an embodiment of the present disclosure;
Fig. 3 is an example structure diagram of an apparatus for setting a language type according to an embodiment of the present disclosure;
Fig. 4 is a diagram of an overall framework of a video-playing and audio track and subtitle memory sharing system according to an example embodiment 1 of the present disclosure;
Fig. 5 is a schematic diagram of an interactive interface according to an example embodiment 1 of the present disclosure;
Fig. 6 is a flowchart of audio track and subtitle memory setting according to an example embodiment 1 of the present disclosure;
Fig. 7 is a flowchart of audio track and subtitle memory sharing according to an example embodiment 1 of the present disclosure;
Fig. 8 is a flowchart of audio track and subtitle memory synchronizing according to an example embodiment 1 of the present disclosure; and
Fig. 9 is a flowchart of audio track and subtitle memory checking according to an example embodiment 1 of the present disclosure.

### Detailed Description of the Embodiments

The present disclosure is described below with reference to the drawings and the embodiments in detail. It is important to note that the embodiments of the present disclosure and the characteristics in the embodiments can be combined under a condition of no conflicts.

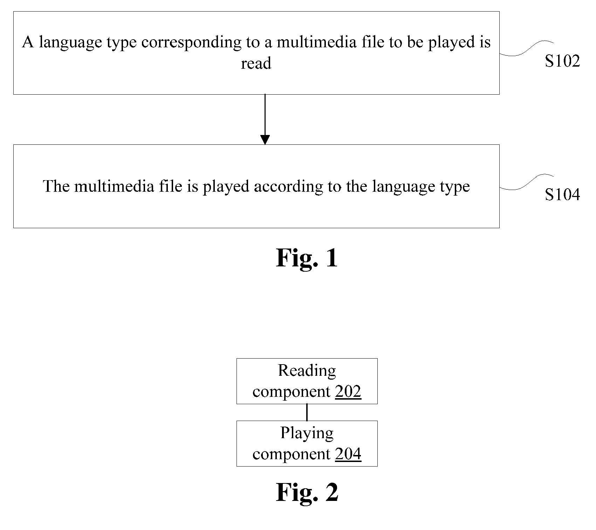

In an embodiment, a method for setting a language type is provided. Fig. 1 is a flowchart of a method for setting a language type according to an embodiment of the present disclosure. As shown in Fig. 1, the method includes the following steps that:
Step S102: a language type corresponding to a multimedia file to be played is read; and
Step S104: the multimedia file is played according to the language type.

According to this embodiment, by means of the steps, when a multimedia file needs to be played, a pre-stored language type corresponding to the multimedia file is read, and the multimedia file is played according to the pre-stored language type. In this way, the difficulty in the related art that the setting of the language type can only be the one-time setting can be overcome, the problems of inconvenient operation and poor usability existing in the mode of setting the language types of the multimedia files in the related art are solved, the setting process required each time when the user plays the multimedia file is reduced, and the experience of the user is improved.

In an example embodiment, the language type herein may include a language type of a subtitle and/or a language type of an audio track.

As an example implementation mode, before the language type corresponding to the multimedia file to be played is read, a user can customize and store the language type of the multimedia file, for example, a setting of the user for a language type corresponding to a single multimedia file may be stored, and/or a unified setting, also called a global setting, of the user for a language type corresponding to all multimedia files may be stored.

In an example embodiment, under a condition that the user sets multiple kinds of language types, for example, the user sets a language type of a single multimedia file and performs global setting, the language type of the multimedia file may be selected and played according to a certain priority in such as case. For example, it can be firstly judged whether the setting of the user for the language type corresponding to the multimedia file to be played is stored; when the setting of the user for the language type corresponding to the multimedia file to be played is stored, the language type corresponding to the multimedia file to be played is read; when the setting of the user for the language type corresponding to the multimedia file to be played is not stored, it is judged whether the unified setting of the user for the language type corresponding to all the multimedia files is stored; when the unified setting of the user for the language type corresponding to all the multimedia files is stored, the unified setting of the user for the language type corresponding to all the multimedia files is read as the language type corresponding to the multimedia file to be played; and when the unified setting of the user for the language type corresponding to all the multimedia files is not stored, a default language type is read as the language type corresponding to the multimedia file to be played.

In addition, with the rising of home groups and multi-screen services, the timely combination and sharing of service resources become important multi-screen services. Realization of one-key service between all group devices so that the user enjoys an indistinctive personalized experience anytime and anywhere has become industry consensus and trend of multi-screen combination. The setting of the language types serves as an important personalized part, the language types are set on the same screen and are shared to relevant group devices, and therefore the experience of the user will be greatly improved.

Thus, as an example implementation mode, the language types of all the multimedia files set by one user can be all synchronized into a group account so that other users in the group share the setting. However, due to the fact that code stream protocols supported by each device for the same video content may be different, the language types of audio tracks and subtitles carried in code streams may also be different, therefore, all devices in a group, to which a current user belongs, in an EPG system, can be globally scanned to determine whether the devices support a language type set in a code stream supported by the multimedia file to be played; and when the devices support the language type set in the code stream supported by the multimedia file to be played, the set language type of the multimedia file is synchronized into the group, otherwise, synchronization is abandoned.

Due to the fact that a plurality of users may exist in one group, in order to avoid updating confusion caused by updating of versions of language types via different user, in an example embodiment, the versions can be updated according to a version number corresponding to the language type of the multimedia file of the EPG system; it is judged whether a version corresponding to the language type of the multimedia file of the EPG system is lower than a version corresponding to a language type of a multimedia file of the user according to the version number; and when the version corresponding to the language type of the multimedia file of the EPG system is lower than the version corresponding to the language type of the multimedia file of the user, the language type of the multimedia file set by the user is synchronized to the EPG system, and a version number corresponding to the language type of the multimedia file of the EPG system is updated, and when the version corresponding to the language type of the multimedia file of the EPG system is not lower than the version corresponding to the language type of the multimedia file of the user, synchronous updating is not performed.

In an example embodiment, common users in the group may scan the version number periodically according to a certain time rule, it is judged whether the version corresponding to the language type of the multimedia file of the EPG system is higher than the version corresponding to the language type of the multimedia file of the current user; when the version corresponding to the language type of the multimedia file of the EPG system is higher than the version corresponding to the language type of the multimedia file of the current user, the language type of the multimedia file of the EPG system is synchronized to the current user, and the version number corresponding to the language type of the multimedia file of the current user is updated; and when the version corresponding to the language type of the multimedia file of the EPG system is not higher than the version corresponding to the language type of the multimedia file of the current user, synchronous updating is not performed.

In an embodiment, an apparatus for setting a language type is also provided. The apparatus is configured to realize the embodiments and the example implementation modes, what have been explained will not be repeated here. Just as terms 'elements' or 'components' used below, the combination of software and/or hardware with predetermined functions can be realized. Although the apparatus described by the following embodiment is better realized by the software, the realization of the hardware or the combination of the software and the hardware may be possible and may be constructed. Fig. 2 is a structure diagram of an apparatus for setting a language type according to an embodiment of the present disclosure. As shown in Fig. 2, the apparatus includes: a reading component 202 and a playing component 204, and the structure is explained below.

The reading component 202 is configured to read a language type corresponding to a multimedia file to be played; and a playing component 204 is coupled to the reading component 202 and is configured to play the multimedia file according to the language type read by the reading component 202.

According to this embodiment, by means of the components, when the multimedia file needs to be played, the reading component 202 reads the pre-stored language type corresponding to the multimedia file, and the playing component 204 plays the multimedia file according to the pre-stored language type, so that the difficulty in the related art that the setting of the language type can only be the one-time setting can be overcome, the problems of inconvenient operation and poor usability existing in the mode of setting the language types of the multimedia files in the related art are solved, the setting process required each time when the user plays the multimedia file is reduced, and the experience of the user is improved.

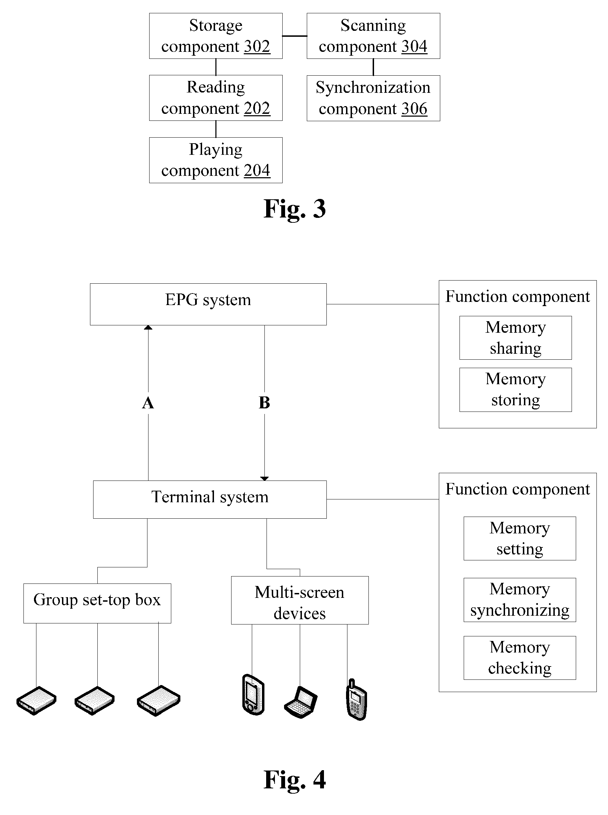

Fig. 3 is an example structure diagram of an apparatus for setting a language type according to an embodiment of the present disclosure. As shown in Fig. 3, the apparatus may further include: a storage component 302, coupled to the reading component 202, and configured to store a setting of a user for a language type corresponding to a single multimedia file, and/or, store a unified setting of the user for a language type corresponding to all multimedia files.

In an example embodiment, as shown in Fig. 3, the apparatus may further include: a scanning component 304, coupled to the storage component 302, and configured to globally scan all devices in a group, to which a current user belongs, in an Electronic Program Guide (EPG) system, to determine whether the devices support a language type set in a code stream supported by the multimedia file to be played; and a synchronization component 306, which is configured to synchronize the set language type of the multimedia file into the group under a condition that a scanning result of the scanning component 304 is that the devices support the language type set in the code stream supported by the multimedia file to be played.

Explanations are given below with reference to an example embodiment, which may combine the abovementioned embodiment and the example implementation modes.

Currently, most of IPTV systems provide basic audio track and subtitle selection functions, however, the selection is one-time settings. Each time when the user watches a video, the user must reselect an audio track and a subtitle, thereby causing inconvenient operation and poor usability. The language habits of the user are not changed generally. If the setting of the user is persisted to enable a video to have an automatic audio track and subtitle memory function, the experience of the user will be greatly improved.

Meanwhile, with the rising of home groups and multi-screen services, the timely combination and sharing of service resources become important multi-screen services. Realization of one-key service between all group devices so that the user enjoys an indistinctive personalized experience anytime and anywhere has become industry consensus and trend of multi-screen combination. The audio track and the subtitle serve as important personalized parts, if the preference can be set on the same screen and shared to relevant group devices, the experience of the user will be greatly improved.

In view of this, a solution is provided in an example embodiment, and an audio track and subtitle memory sharing function of the video can be conveniently realized. The method not only can perform audio track and subtitle memory setting, but also can realize a memory group sharing function, thereby greatly facilitating the operation of the user and improving an experience of the user.

### Example embodiment 1

In the example embodiment, a method for memorizing and sharing the audio track and subtitle of a video in an IPTV system is provided. The user can conveniently and quickly set and memorize the audio track and the subtitle of the video according to his/her own language habits, and memory sharing between groups is realized.

### 1. An overall framework solution

The example embodiment realizes memorization of the audio track and the subtitle of a terminal and sharing of a memory between the group devices by the integration of a terminal system and the EPG system. Fig. 4 is a diagram of an overall framework of a video-playing and audio track and subtitle memory sharing system according to an example embodiment 1 of the present disclosure. The overall framework will be described below with reference to Fig. 4.
(1) The EPG system is a central system for managing device data between groups, and realizes centralized data management via policies such as a scheduling policy, a synchronizing policy, a persistence policy.
(2) The EPG system includes a memory storing function and a memory sharing function. The memory storing function refers to management of shared data of the audio track and the subtitle in a database to realize persistence, the memory sharing function refers to realization of sharing of the memory between the group devices via various policies, and the solution in the present example embodiment adopts a version management mode.
(3) The group devices refer to a group of terminal devices which are associated in a mode of sharing the same parent account, including group set-top boxes and multi-screen devices, and data between the group devices can be shared.
(4) The terminal system refers to the IPTV system carried by the terminal devices, including a memory setting function component, a memory synchronizing function component and a memory checking function component.
(5) The terminal system realizes interaction with the EPG system, including uploading of memory data as shown in an arrow A and synchronizing of the memory data as shown in an arrow B.

### 2. Main function components:

four function components are included, which are respectively an audio track and subtitle memory setting function component, an audio track and subtitle memory sharing function component, an audio track and subtitle memory synchronizing function component and an audio track and subtitle memory checking function component, wherein memory setting, synchronizing and checking are mainly completed on the terminal system, and memory sharing can be realized by the EPG system. The four functions are introduced below.
(1) Audio track and subtitle memory setting:
   an audio track and subtitle memory of a video includes a single video information memory (a single memory) and a global video memory (a global memory), the single memory refers to individual setting and memorizing of audio track and subtitle information of a certain content video, and the global memory refers to batched setting and memorizing of the audio track and subtitle information of all content videos.

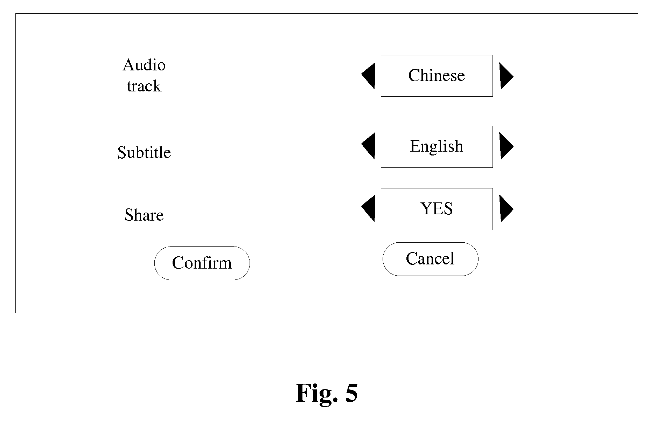

      Fig. 5 is a schematic diagram of an interactive interface according to an example embodiment 1 of the present disclosure. As shown in Fig. 5, the user uses an interactive interface on the terminal system, completes language setting and local storage of the audio track and the subtitle of a single video or a global video, and confirms whether to share the setting to the other group devices, if sharing is needed, data are uploaded to the EPG system, and sharing implementation is completed by an EPG end.
(2) Audio track and subtitle memory sharing:
   the EPG system realizes sharing of the memory data uploaded by the terminal by version management.

   For example, a certain terminal sets audio track and subtitle information and confirms to share the setting to the other group devices, and the terminal system will transfer the data to the EPG system.
   The EPG system only maintains a piece of global memory information for the global memory, only needs to update the information, and updates a version number of the global memory.
   For the single memory, due to the fact that code stream protocols supported by each device for the same video content are different, audio tracks and subtitles carried in code streams may also be different, the EPG system may need to check the information. For example, the EPG system may check whether the code streams supported by each device (including a set-top box or a Personal Computer (PC) or a PAD) contain the set audio track and subtitle information. If YES, the EPG system updates a memory version number of the screen and updates memory data of the video of the screen. If NO, the version number and the data are not updated.
   Due to the fact that the number of video programs is huge and the single memory is set frequently, if memory data of all programs are downloaded to the terminal each time, the performances of the terminal will be influenced. In view of this aspect, the example embodiment may adopt an incremental data packet mode, namely when the terminal system is initialized, the EPG system performs comparison according to memory version numbers stored by the terminal and the system, all pieces of updated single memory information between the versions are subjected to processing such as duplication removal to generate differentiated data which are provided for the terminal in an incremental packet form for downloading.
(3) Audio track and subtitle memory synchronizing:
   the audio track and subtitle memory synchronizing refers to that when the terminal system is initialized (the set-top box is started or the multi-screen terminal starts client software), the terminal system compares a local audio track and subtitle data version with a data version stored by an EPG server side, if a memory version stored by the terminal system is lower than that stored by an EPG, it represents other group devices have updated audio track and subtitle information and shared the information, and the terminal device needs to download latest memory information and update local data.
      The audio track and subtitle memory synchronizing includes synchronizing of the global memory and synchronizing of the single memory, wherein the synchronizing of the global memory is relatively simple, only one record is retained on the EPG system, and latest data only need to be downloaded to a local part of the terminal and cover old data; the synchronizing of single information is relatively complicated, an incremental memory data packet is generated by the EPG system, and the terminal downloads and updates the data.
(4) Audio track and subtitle checking:
   when the user plays a video, the terminal system automatically selects an audio track and a subtitle to play the video by comparing settings of the single memory and the global memory; the system firstly checks whether the video has stored single audio track and subtitle information; if YES, the video can be played by adopting the setting; if NO, whether there is global setting checking is next performed, and if YES, the video can be played by adopting the setting; and if neither the single setting nor the global setting is provided, the video is played by adopting a default audio track and a default subtitle in the code streams.

### 3. Main flows:

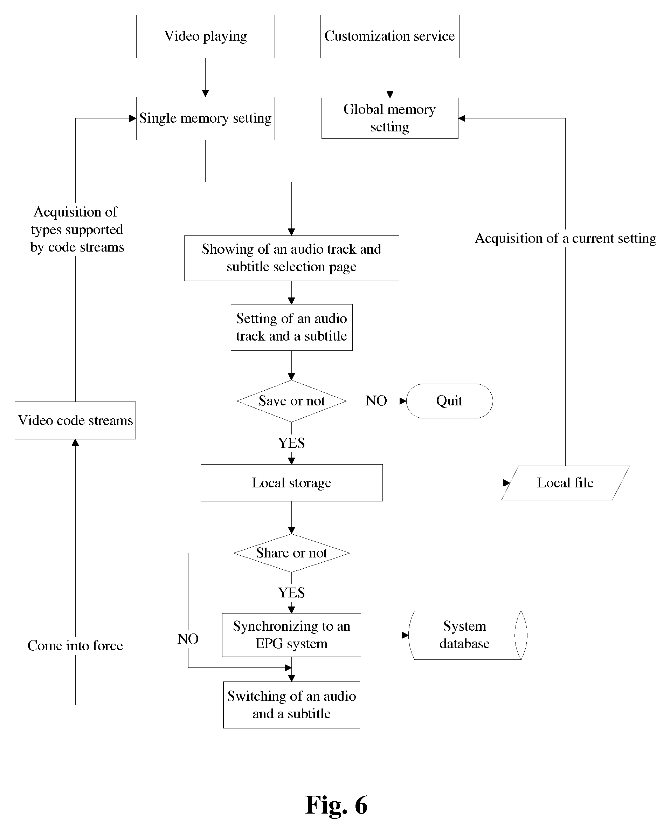

(1) Fig. 6 is a flowchart of audio track and subtitle memory setting according to an example embodiment 1 of the present disclosure. As shown in Fig. 6, an audio track and subtitle memory setting flow includes that:
   S2. audio track and subtitle settings (the single memory) are selected for the played video, or it goes into a customization page (the global memory), and it goes into an audio track and subtitle language selection page which shows currently used audio track and subtitle information and provides other supported options.
   S4. the user selects a certain language, stores the language, and chooses whether to share the setting.
   S6. the information is stored in a terminal system file, thereby realizing a memory function of the terminal.
   S8. if the user chooses to share the setting, the information is synchronized into the EPG system and is stored in a system database, thereby realizing sharing of a memory group.
   S10. by setting a terminal player, the current audio track and subtitle information of the video is switched, so that the selection comes into force immediately upon the selection of the user.

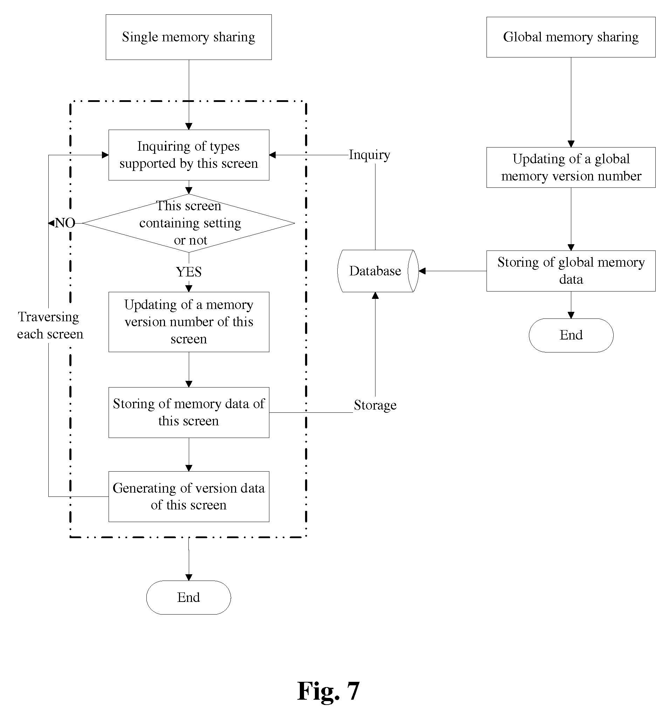

(2) Fig. 7 is a flowchart of audio track and subtitle memory sharing according to an example embodiment 1 of the present disclosure. As shown in Fig. 7, an audio track and subtitle memory sharing flow includes that:
   S2. the user stores audio track and subtitle information on the terminal system, shares the information, and uploads memory data to the EPG system.
   S4. the EPG system directly updates global memory data for global memory information, and updates a version number.
   S6. the EPG system will traverse support types of each device for the audio track and subtitle of the video content for single memory information; and if the type of the audio track and the subtitle are supported, the audio track and subtitle information of the video content under this screen is updated, and the version number is updated.
   S8. step S6 is repeated, and a set-top box, a computer, a mobile phone and a pad screen are checked in sequence.
   S10. when the terminal system is initialized, an incremental data packet is generated according to a version difference for downloading and updating of the terminal.

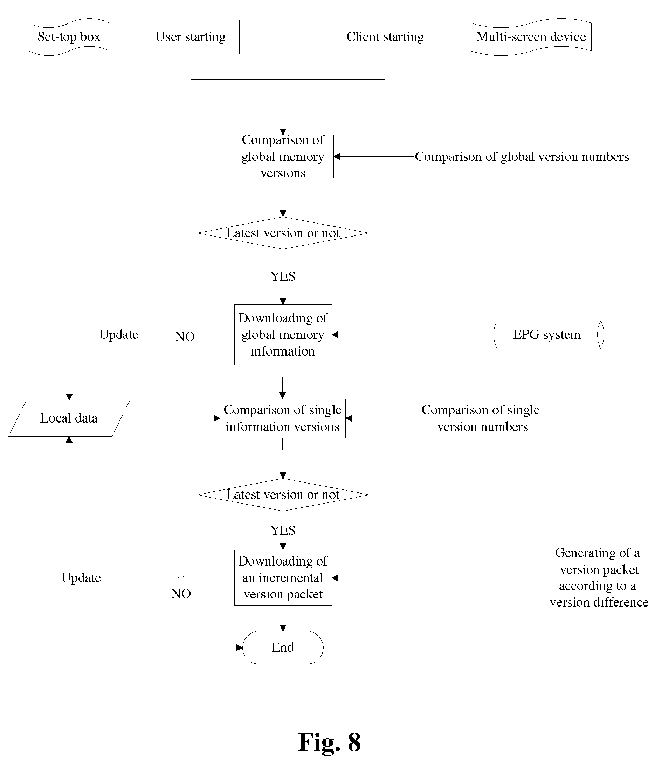

(3) Fig. 8 is a flowchart of audio track and subtitle memory synchronizing according to an example embodiment 1 of the present disclosure. As shown in Fig. 8, an audio track and subtitle memory synchronizing flow includes that:
   S2. after the user starts the set-top box or starts clients (other devices with screen), the terminal system will compare a memory information version with that of the EPG system.
   S4. comparison for the version number of the global memory is performed firstly, if a terminal memory version is lower than a memory version stored by the EPG system, it means that other devices share global information, and the terminal downloads and updates the global information of the EPG; and if NO, updating is not performed, and it goes into the next step.
   S6. comparison for the version number of the single memory is performed secondly, if the terminal memory version is lower than the memory version stored by the EPG system, it means that other devices share single information, and the terminal will download and update the incremental data packet; and if NO, updating is not performed.

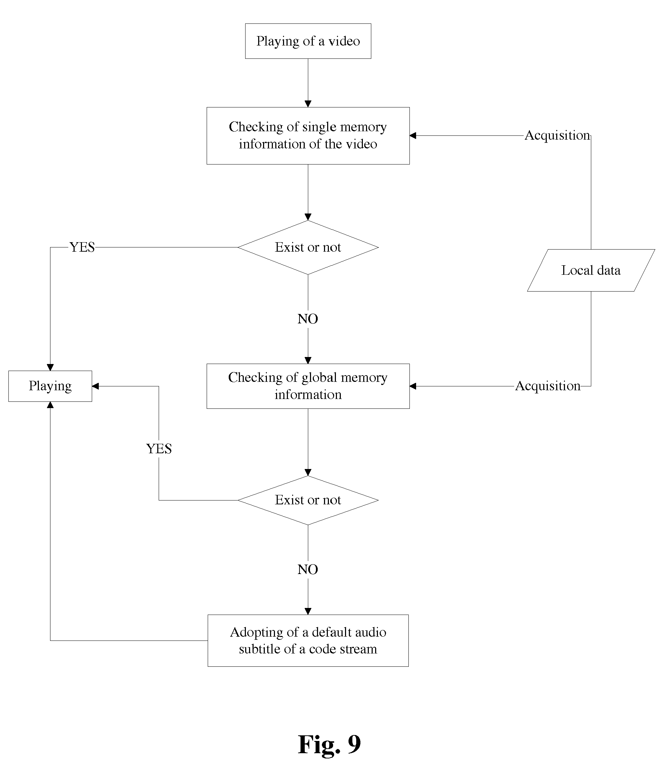

(4) Fig. 9 is a flowchart of audio track and subtitle memory checking according to an example embodiment 1 of the present disclosure. As shown in Fig. 9, an audio track and subtitle memory checking flow includes that:
   S2. when the user plays a video, the terminal system firstly checks whether a single audio track and subtitle memory of the video has been set, if YES, the video is played according to the single audio track and subtitle memory, and if NO, the next step is carried out.
   S4. the terminal system checks whether a global video audio track and subtitle memory has been set, if YES, the video is played according to the global video audio track and subtitle memory, and if NO, the next step is carried out.
   S6. the default audio subtitle information of the code streams is adopted for playing.

The example embodiment realizes a method for realizing audio track and subtitle memorizing and sharing in the IPTV system, and has the characteristics of simple realization, clear logic, convenient use and the like.

### Example embodiment 2

The technical solution of the example embodiment is explained below with reference to the drawings in detail.
1. As shown in Fig. 6, audio track and subtitle memory setting is described in detail:
   (1) the user sets the single and global memories of the audio track and the subtitle via the interactive interface.
   (2) the set audio track and subtitle information is packaged into a json character string, and a read-write interface of the terminal system is called to store the setting into a local terminal file.
      Call interface:
      setAttribute(key,value);
      in the above, key and value are in character string types, the key is an indicator for a single video content for the single memory and is a fixed value 'ALL' for the global memory, and the value is an audio track and subtitle information, e.g., json string.
   (3) synchronizing to the EPG system is performed.
      If sharing is selected, the current audio track and subtitle information is packaged into a bean object, and is transferred into the EPG system via an interface.
      Call interface:
      public setAudio(AudioInfo info,String prold);
      public setSubtitle(Subtitlelnfo info,String prold);
      in the above, Audiolnfo and Subtitlelnfo are bean objects of an audio and a subtitle, and prold is a unique identifier of a video for the single memory and is a fixed value 'ALL' for the global memory.
   (4) a current audio track and subtitle value of the video is modified to make it come into force immediately.
      Call interface:
      mp.set("SetPreAudioTrack",value);
      mp.set("SetPreSubtitleTrack",value);
      in the above, mp represents a terminal player object, and value represents a current audio track value or a current subtitle value, which comes into force immediately after being set.
2. The audio track and subtitle memory sharing flow is described in detail with reference to Fig. 7:
   (1) after the terminal device sets a setting memory, sharing is selected, and an interface of the EPG is called to realize storage.
      Call interface:
      public setAudio(AudioInfo info,String prold);
      public setSubtitle(Subtitlelnfo info,String prold);
      in the above, Audiolnfo and Subtitlelnfo are bean objects of an audio and a subtitle, and prold is a unique identifier of a video for the single memory and is a fixed value 'ALL' for the global memory.
   (2) the EPG system inquires and compares audio track and subtitle information supported by various devices.
      Call interface:
      public boolean checkAudioBySreen(AudioInfo info,int screenType);
      public boolean checkSubtitleBySreen(SubtitleInfo info,int screenType);
      in the above, Audiolnfo and Subtitlelnfo are bean objects of an audio and a subtitle to be set, screenType indicates an identifier of a terminal screen, if a return value is false, it represents that this screen does not contain the audio track and subtitle information and updating is not needed, and if the return value is true, it represents that this screen contains the audio track and subtitle information and data need to be updated.
   (3) an EPG end persists information to a database, and updates a current version.
      Call interface:
      public saveAudio(User user,List<AudioInfo>infoList);
      public saveSubtitle(User user,List<SubtitleInfo>infoList);
      in the above, user represents a user information object, and infoList is a list of the audio track and the subtitle.
   (4) the EPG end generates an interface of an incremental data packet.
      Call interface:
      public List<AudioInfo>createAudioData(int version);
      public List<SubtitleInfo>createSubtitleData(int version);
      in the above, version is a memory version number of the terminal, and a return value List is a data list needing to be updated.
3. As shown in Fig. 8, the audio track and subtitle synchronizing flow is described in detail:
   (1) a version of the EPG is acquired and compared with a local version.
      Call interface:
      public int getGroup Version();
   (2) if the version of the EPG end is higher than the local version, latest memory information of the EPG end is downloaded.
      Call interface:
      public List<AudioInfo>getAudioData(User user);
      public List<SubtitleInfo>getSubtitleData(User user);
      in the above, user represents a user information object, a return List represents an audio track and subtitle data packet needing to be updated.
   (3) local memory data is updated.
      Call interface:
      setAttribute(key,value);
      in the above, key and value are in character string types, the key is an indicator for a single video content for the single memory and is a fixed value 'ALL' for the global memory, and the value is an audio track and subtitle information, e.g., json string.
4. As shown in Fig. 9, the audio subtitle memory checking flow is described in detail.
   (1) when a video is played, single audio subtitle information of the video is read.
      Call interface:
      getChannelSoundTrack (prold);
      getChannelCaption (prold);
      in the above, prold is a unique identifier of the video program, if acquired data are not null, it means that the single audio subtitle information has been set for the video, and the audio subtitle information is switched by setting a player. The interface is as follows:
         mp.set("SetPreAudioTrack",value);
         mp.set("SetPreSubtitleTrack",value);
   (2) if single memory information is not acquired, the audio subtitle information of the global memory is read.
      Call interface:
      getDefaultSoundTrack();
      getDefaultCaption();
      in the above, if the acquired data are not null, it means that the audio subtitle information of the global memory has been set, and the audio subtitle information is switched by setting the player. The interface is as follows:
         mp.set("SetPreAudioTrack",value);
         mp.set("SetPreSubtitleTrack",value);
   (3) if single audio subtitle information and global audio subtitle information are not acquired, it means that the information has not been set, and the default information of the code streams is adopted for direct playing.

In another embodiment, software is also provided, which is configured to execute the technical solutions described in the embodiments and the example implementation modes.

In another embodiment, a storage medium is also provided. The software is stored in the storage medium which includes, but not limited to, an optical disk, a floppy disk, a hard disk, an erasable memory and the like.

To sum up, the example embodiments have the characteristics of simple implementation mode, easy extension and the like. Obviously, those skilled in the art should understand that all components or all steps in the present disclosure can be realized by using a general computation apparatus, can be centralized on a single computation apparatus or can be distributed on a network composed of a plurality of computation apparatuses. Optionally, they can be realized by using executable program codes of the computation apparatuses, so that they can be stored in a storage apparatus and executed by the computation apparatuses, the steps shown or described can be executed in a sequence different from the sequence here under certain conditions, or they are manufactured into each integrated circuit component respectively, or a plurality of components or steps therein are manufactured into a single integrated circuit component. Thus, the present disclosure is not limited to combination of any specific hardware and software.

The above is only the example embodiments of the present disclosure, and is not intended to limit the present disclosure. There can be various modifications and variations in the present disclosure for those skilled in the art. Any modifications, equivalent replacements, improvements and the like within the principle of the present disclosure shall fall within the protection scope defined by the claims of the present disclosure.

### Industrial Applicability

As mentioned above, the method and apparatus for setting a language type provided by the embodiments of the present disclosure have the following beneficial effects that: a setting process conducted each time when the user plays the multimedia file is reduced, and the experience of the user is improved.

## Claims

1. A method for setting a language type, comprising:
reading a language type corresponding to a multimedia file to be played; and
playing the multimedia file according to the language type.

2. The method as claimed in claim 1, wherein before the language type corresponding to the multimedia file to be played is read, the method further comprises:
storing a setting of a user for a language type corresponding to a single multimedia file; and/or
storing a unified setting of the user for a language type corresponding to all multimedia files.

3. The method as claimed in claim 2, wherein reading the language type corresponding to the multimedia file to be played comprises:
judging whether the setting of the user for the language type corresponding to the multimedia file to be played is stored;
when the setting of the user for the language type corresponding to the multimedia file to be played is stored, reading the language type corresponding to the multimedia file to be played; when the setting of the user for the language type corresponding to the multimedia file to be played is not stored, judging whether the unified setting of the user for the language type corresponding to all the multimedia files is stored;
when the unified setting of the user for the language type corresponding to all the multimedia files is stored, reading the unified setting of the user for the language type corresponding to all the multimedia files as the language type corresponding to the multimedia file to be played; and when the unified setting of the user for the language type corresponding to all the multimedia files is not stored, reading a default language type as the language type corresponding to the multimedia file to be played.

4. The method as claimed in claim 2, wherein after the setting of the user for the language type corresponding to the single multimedia file is stored and/or the unified setting of the user for the language type corresponding to all the multimedia files is stored, the method further comprises:
globally scanning all devices in a group, to which a current user belongs, in an Electronic Program Guide, EPG, system, to determine whether the devices support a language type set in a code stream supported by the multimedia file to be played; and
when the devices support the language type set in the code stream supported by the multimedia file to be played, synchronizing the set language type of the multimedia file into the group.

5. The method as claimed in claim 4, wherein synchronizing the set language type of the multimedia file into the group comprises:
updating a version number corresponding to a language type of a multimedia file of the user;
judging whether a version corresponding to the language type of the multimedia file of the EPG system is lower than a version corresponding to the language type of the multimedia file of the user according to the version number; and
when the version corresponding to the language type of the multimedia file of the EPG system is lower than the version corresponding to the language type of the multimedia file of the user, synchronizing the language type of the multimedia file set by the user to the EPG system, and updating a version number corresponding to the language type of the multimedia file of the EPG system.

6. The method as claimed in claim 5, wherein before the language type corresponding to the multimedia file to be played is read, the method further comprises:
judging whether the version corresponding to the language type of the multimedia file of the EPG system is higher than the version corresponding to the language type of the multimedia file of the current user according to the version number; and
when the version corresponding to the language type of the multimedia file of the EPG system is higher than the version corresponding to the language type of the multimedia file of the current user, synchronizing the language type of the multimedia file of the EPG system to the current user, and updating the version number corresponding to the language type of the multimedia file of the current user.

7. The method as claimed in any one of claims 1 to 6, wherein the language type comprises:
a language type of a subtitle and/or a language type of an audio track.

8. An apparatus for setting a language type, comprising:
a reading component, which is configured to read a language type corresponding to a multimedia file to be played; and
a playing component, which is configured to play the multimedia file according to the language type.

9. The apparatus as claimed in claim 8, further comprising:
a storage component, which is configured to store a setting of a user for a language type corresponding to a single multimedia file, and/or, store a unified setting of the user for a language type corresponding to all multimedia files.

10. The apparatus as claimed in claim 9, further comprising:
a scanning component, which is configured to globally scan all devices in a group, to which a current user belongs, in an Electronic Program Guide, EPG, system, to determine whether the devices support a language type set in a code stream supported by the multimedia file to be played; and
a synchronization component, which is configured to synchronize the set language type of the multimedia file into the group under a condition that a scanning result of the scanning component is that the devices support the language type set in the code stream supported by the multimedia file to be played.
